Europäisches Patentamt

(19) European Patent Office

Office européen des brevets

(11) Publication number: **0 303 099**
**B1**

# EUROPEAN PATENT SPECIFICATION

(45) Date of publication of the patent specification:
05.12.90

(51) Int. Cl.⁵: **B60R 13/06**

(21) Application number: **88112030.7**

(22) Date of filing: **26.07.88**

(54) Improvements in the weatherstrips.

(30) Priority: **30.07.87 IT 2152987**

(43) Date of publication of application:
**15.02.89 Bulletin 89/7**

(45) Publication of the grant of the patent:
**05.12.90 Bulletin 90/49**

(84) Designated Contracting States:
**DE ES FR GB**

(56) References cited:
**EP-A- 0 127 591**

(73) Proprietor: **SMAE-SOCIETA' MERIDIONALE ACCESSORI ELASTOMERICI S.p.A, Agglomerato Industriale, I-84091 Battipaglia (Salerno)(IT)**

(72) Inventor: **Piccinini, Dino, Via Cassani, 6, I-00046 Grotta Ferrata Roma(IT)**
Inventor: **Arabino, Domenico, Via S. Baratta, 31, I-84100 Salerno(IT)**

(74) Representative: **Giannesi, Pier Giovanni et al, Pirelli S.p.A. Direzione Brevetti Piazzale Cadorna, 5, I-20123 Milano(IT)**

ACTORUM AG

## Description

The present invention relates to a weatherstrip in elastomeric material applied around to the car-window provided with slidable glass, more specifically the present invention relates to weatherstrips having surfaces suitable to the sliding of a runner to which the glass of a car-window is associated.

Weatherstrips in elastomeric material comprising a central portion and two lateral ones which are folding in respect to the central one to determine a structure having substantially a "U" shape and insertable in a suitable seat of a frame for car-window, are already known.

Generally the frame of a door car comprises an upper horizontal frame member laterally delimited by two columns.

The known weatherstrip, formed by more extruded components, is inserted and blocked on the frame through suitable wings able to retain the weatherstrip into corresponding metallic plates.

The weatherstrips to which the improvements of the present invention are referred are of the type comprising absolutely smooth surfaces having high rigidity, and employed in combination with a suitable rigid runner to which the glass is associated; the runner is mounted in order to slide in contact with portions of the weatherstrip inserted along the rear column of the opening of the car-window.

A particular example of the type of the cited weatherstrip is that described in the Italian patent application No. 23 871 A/83 (or DE-A 3 442 840) of the same Applicant to which description we would refer for any further detail.

The weatherstrip surfaces in contact with the runner comprise compounds of elastomeric material suitable to determine a smooth surface having low friction coefficient.

More specifically the compound in elastomeric material to determine the cited conditions of high sliding for the runner comprises lubricating charges, graphite – among the others – and a siccative oil. The hardness of the layers formed by such a compound is higher than 50 Shore D.

Hereinafter is briefly mentioned the fact that the weatherstrip now cited as example usually comprises at least two sliding surfaces for the runner: a first surface on the central portion of the weatherstrip and a second surface, spaced from the first one, protruding from a side of the weatherstrip.

Between the two cited sliding surfaces the movement of the runner is guided.

Unfortunately, in the cited weatherstrips, the runner may be subjected to forces that, although lying on the same plane of the glass, are perpendicularly directed to the advancing direction of the runner along a column of the frame, with the consequent, possible, loosening of the portions of the weatherstrips, having lesser resistance, from the frame in which they are applied.

In fact, for instance, when the glass is slightly up in the opening of the car-window, it may occur that the weight of the driver's arm leaned on the upper edge of the glass, transmits an anomalous push on the runner.

Such a push transmitted on the angular portion of the weatherstrip, may provoke the loosening of such angular portion from the same frame and, lastly, the loosening of the glass with the runner.

Moreover, the cited undesired forces could be originated by various other causes when, for instance, hands are applied on the plane of the glass to open a car-window for theft purposes or when, for instance, transversal pushes, exerted by the shoulder of a passenger of the vehicle, are applied to the glass.

It is known from the document EP-A 0 127 591 to provide a weatherstrip in elastomeric material having a structure which is substantially U-shaped is insertable in a seat of the frame of car-window provided with sliding glass. The weatherstrip is provided with a rigid core at least partially embedded in the body of the weatherstrip. The rigid core surrounds an arm provided in the lateral portion of the weatherstrip protruding towards the runner of the glass. The sliding contact between the weatherstrip and the runner of the glass is carried out by the rigid surface of the core and the rigid surface of the runner. Due to this rigid contact between rigid surfaces and due to the rigid structure of the weatherstrip provided with such a core, under the stress condition above described, even though the runner should not be spread away from the inwardly protruding arm, it is possible that the folded weatherstrip be spread away from its seat in the frame of the vehicle. Moreover the rigid contrast between the core and the rigid runner can cause the drawback: of undesired noises when the glass is subjected to oscillations or vibrations.

The purpose of the present invention is to carry out a weatherstrip which is sufficiently rigid on one side and sufficiently elastic on the other side to avoid all the cited drawbacks.

The object of the present invention is therefore a weatherstrip in elastomeric material comprising: a central portion and two lateral portions folded with respect to the central one to determine a structure which is substantially U-shaped in cross-section and insertable in a seat of the frame for a car-window provided with sliding glass and having an upper horizontal frame member and two columns; an arm of predetermined length provided on at least a first of the two lateral portions, folded towards the inside of the weatherstrip parallel to the first lateral portion itself and spaced from the central portion, the extremity of said arm and at least a zone of the central portion of the weatherstrip forming guide and contact surfaces for the opposite sides of the rigid runner associated to the glass and slidable along one of said columns of the frame to open and close the car-window; a resistant element provided in an angular part of the U-shaped weatherstrip delimited between the central portion and said first lateral portion; and blocking means to fix the resistant element to the angular part characterized in that said resistant element is formed by two slabs substantially perpendicular to each other and in that said blocking means comprises two continuous elastomeric C shaped profiles, one of the profiles being formed on the inner part of the central portion and the other one on the first lateral portion under the arm, said resistant element being inserted between said profiles.

Further developments in line with the invention as claimed in claim 1 are referred to in the dependent claims.

The present invention will be better understood from the following detailed description given only by way of non-limiting example and made with reference to the attached sheets of drawings in which:

– Figure 1 shows a cross view of a weatherstrip according to the invention comprising a runner to which the glass of a car-window is associated, a resistant element and blocking means designed to avoid the loosening of the weatherstrip;
– Figure 2 shows a frontal view of the frame around a car-window in which a car weatherstrip is mounted;
– Figure 3 shows a cross view of a weatherstrip without the resistant element and the blocking means shown at Figure 1.

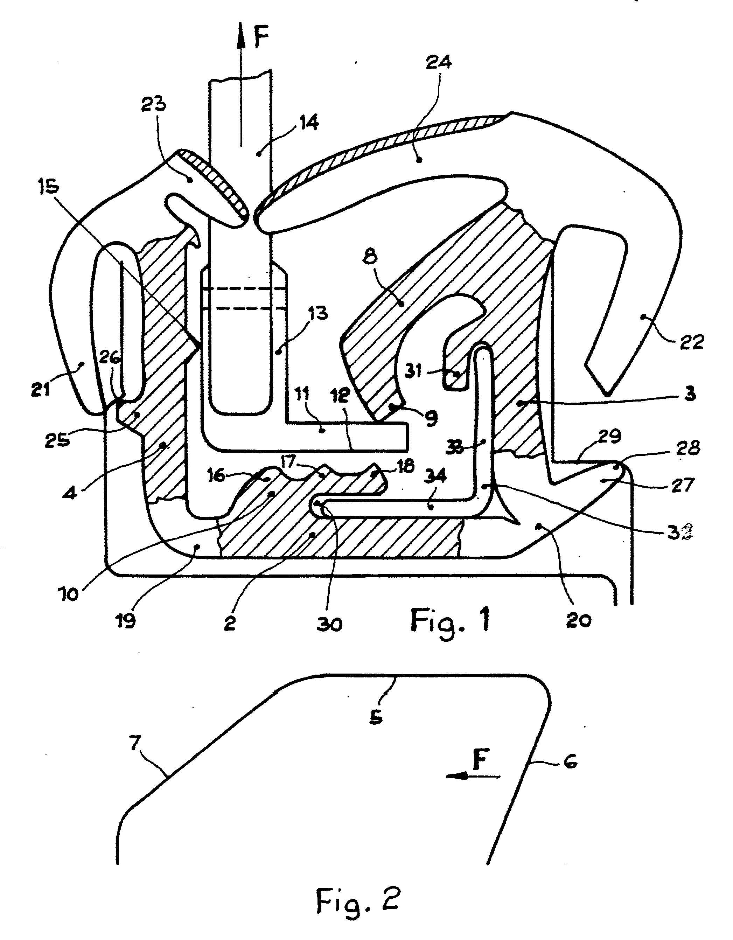

In figure 1 by 1 it is indicated a weatherstrip in elastomeric material comprising a central portion 2 and two lateral portions 3, 4 folded in respect to the central one to determine a structure having substantially a "U" shape to be inserted in a seat of a frame for a car-window provided with sliding glass.

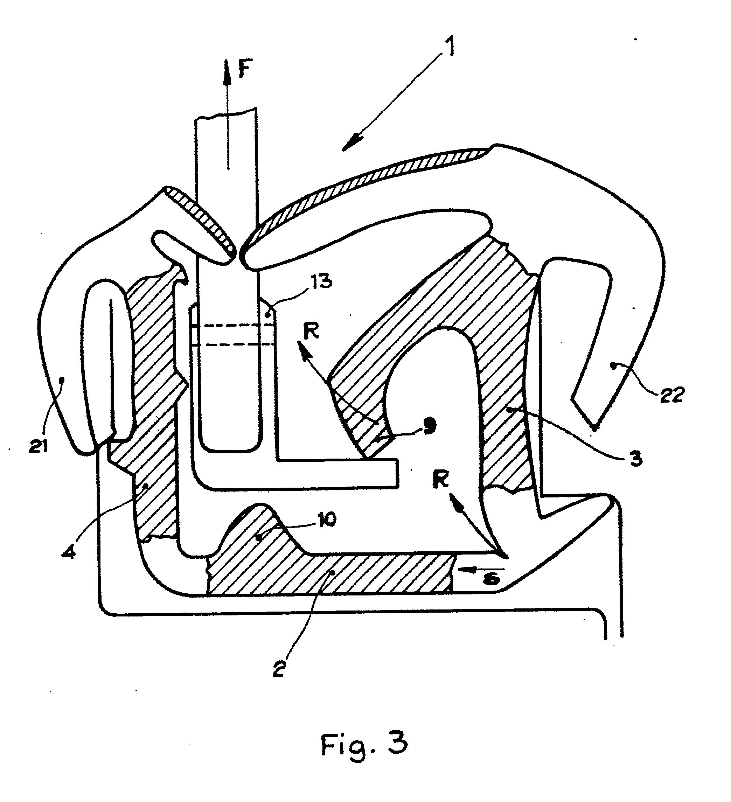

The frame which surrounds the opening of the car-window is schematically shown in figure 2 and comprises, in connection with our description, an upper horizontal frame member 5 and two columns 6, 7.

The first lateral portion 3 of the weatherstrip 1 is folded towards the inside parallel to itself and has the shape clearly visible in figure to form an arm 8 of a predetermined length whose extremity 9 ends spaced from the central portion 2 of the weatherstrip.

The extremity 9 of the arm 8 and a zone 10 of the central portion of the weatherstrip form suitable guide and contact surfaces for the opposite sides 11, 12 of a rigid runner 13 to which the glass 14 is associated.

In the cited embodiment, the runner is mounted to slide along the column 6 of the frame to open and close the car-window.

The runner is furtherly guided by a longitudinal rib 15 on the lateral portion 4 of the weatherstrip.

In particular the zone 10 designed for the guide of the runner comprises, in the embodiment shown in figure 1, a relief 16 and two continuous longitudinal ribs 17 and 18.

The guide surfaces 9 and 10 are carried out, for instance, by using an elastomeric compound comprising self-lubricating charges and in particular graphite and siccative-oil which appear on the surface to form a film able to help the sliding of the runner.

Moreover, the guide surfaces of the runner are realized by an elastomeric compound having high hardness, preferably with a hardness higher than 50 Shore D.

The characteristics of the elastomeric material and the hardness of such a material have been described in the Patent Application No. 23 871 A/83 (DE-A 3 442 840) of the same Applicant.

The weatherstrip comprises, in the preferred example shown in figure 1, two zones able to determine the folding capacity of the lateral portions 3 and 4 in respect to the central one 2.

The cited folding capacity that helps the mounting of the weatherstrip in the U-shaped seat is realized by two hinges 19 and 20 obtained by an elastomeric material having a hardness less than the one forming the remaining portion of the weatherstrip, namely in soft rubber, for instance having hardness from 60 to 70 Shore A.

The hinges 19 and 20 are sketched in the figure without dashed lines to show their extension in respect to the parts formed by elastomeric material having highest rigidity.

The weatherstrip is provided with fastening means to the seat of the frame embodied by two finishing little wings in soft rubber 21 and 22 and turned towards the outside in respect to the lateral portion so as to comprise the proper metallic structures of the frame seat.

From the opposite sides of the little wings 21 and 22 two edges 23 and 24 are protruding. The edges 23 and 24 are folded up towards the inside and provided with flocked surfaces suitable to lap the glass in its own displacement into the opening car-window.

The other fastening parts of the weatherstrip to the frame comprise a protuberance 25 in rigid rubber protruding outwardly to the lateral portion 4 and a little wing 27 in soft rubber, protruding from the lower extremity of the lateral portion 3.

The protuberance 25 is disposed on rabbet on a proper step 26 of the frame and the little wing 27 is engaged with an extremity 28 thereof on the rabbet surface 29 of the frame.

The main characteristic of the invention is that of comprising, in the angular part delimited between the central portion 2 and the lateral portion 3, suitable means to avoid the loosening of the same angular part from the frame in presence of straddle forces F that the runner may possibly exercise on the extremity 9 of the arm 8.

The cited means to avoid the loosening the weatherstrip comprise resistant elements and blocking means of such elements on the weatherstrip.

Preferably, the blocking means are in elastomeric material and are extruded simultaneously to the elastomeric parts of the weatherstrip.

In the example of figure 1 the blocking means comprise two C-shaped continuous profiles 30, 31 in elastomeric material, one substantially disposed in the middle of the portion 2 of the weatherstrip, the other inside of the lateral portion 3.

The resistant element 32 is formed in a preferred embodiment by two slabs 33, 34 substantially perpendicular to one another, carried out in rigid material, metallic or plastic.

The resistant element 32 is inserted between the C-shaped 30, 31 profiles before carrying out the mounting of the weatherstrip in the frame seat.

The profiles 30 and 31 are carried out in hard elastomeric material, as well as the parts of the weatherstrip provided to constitute surfaces having high sliding for the runner.

Preferably the transversal section of the weatherstrip in the elastomeric parts is constant and the same weatherstrip is a single profile applied both on the columns and on the frame member without solution of continuity.

The resistant element 32 appears, on the other hand, to be applied only along the portion of the weatherstrip associated to the column 6, namely where the runner moves up or down, subjected to possible transversal forces F according to the direction shown in figures 1 and 2.

The aim of the invention is achieved.

To better clarify the invention and the achieved goals, in figure 3 it has been illustrated a weatherstrip for car-window in which the main characteristic of the invention has been omitted, namely, the means for counteracting the forces which tend to get the weatherstrip loose from the frame.

In the same figure 3 a force F acting on the glass plane in a transversal direction to the displacement of the glass and further forces representing the action of the force "F" on some parts of the weatherstrip have been indicated by arrows R.

As it can be seen from the same figure, the effect of force F is such as to tend to have the extremity 9 of the arm 8 rotated in direction of the curvilinear arrow in contact with the surface of a face of the runner.

Under the effect of the force F the angular part of the weatherstrip delimited by the lateral portion 3 reacts to its own deformation owing to the presence of fastening means to the frame, that is owing to the retaining action exercised by the small wing 28 against the rabbet surface 29 of the frame and to the bearing of the wing 22 against the seat of the frame.

On the other hand, in presence of force F of a certain value, the angular part of the weatherstrip, since it is less resistant than the other parts of the weatherstrip due to its folding capacity for the insertion of the weatherstrip in the frame, it will deform itself even more following the R arrow and namely moving gradually towards the inside of the "U" configuration of the seat of the frame.

In these conditions the profile is taken off from the seat with the consequent loosening of the glass together with the runner.

The invention overcomes the cited drawback because, as it can be seen in the example of figure 1, the resistant element 32 maintains unchanged the distance between two whatever points lying in contact with the two slabs 33 and 34, and therefore it prevents any relative approaching between the two extreme points of the angular hinge of the weatherstrip, one on the lateral portion 3, the other on the central portion 2.

Substantially, the presence of the resistant element 32 inserted between the "C"-shaped rigid elastomeric profile 30 and 31, contrasts the deformation of the hinge zone of the weatherstrip.

In other words, it can be said that the effect of force F applied to the runner is both a loosening couple R on the arm 8 and a compression push S on the central portion 2 of the weatherstrip; the stiffening of the weatherstrip determined by the presence of the resistant element 32 contrasts both the couple R and the push S.

Obviously, the action to avoid the loosening of the weatherstrip can be obtained by resistant elements different from those described in the example of figure 2, provided that any whatsoever solution is adopted, the resistant element and the block:ing means are able to maintain unchanged the distance between two points of the angular zone of the weatherstrip disposed at a suitable distance from the part in soft rubber forming the hinge zone.

The cited resistant element could also be carried out by using metallic structure or, in any case, resistant structures embedded in the elastomeric material only in the part of the weatherstrip provided to be applied on the column where the runner is sliding, namely where irregular forces transversally acting in respect to the displacement direction of the runner might be founded.

Then, it appears evident how the cited resistant element can be extended also to the second angular portion, in case that the runner, instead of being formed by an L-shaped member, is formed by two L-shaped members flank.ed to one another and slides in a weatherstrip whose left and right parts, in respect to a median plane, are identical.

In this weatherstrip it will be possible to embody two angular hinges in soft rubber along all the thickness, with a suitable extension of the relative angular zones in order to easily fold, with a "U" shape, the weatherstrip and to insert it, with the maximum precision, in the corresponding U-shaped area of the frame.

Always speaking about this weatherstrip, the high deformability between lateral and central portions will however be accompanied, according to the aim of the invention, by the presence of resistant elements 32 disposed in the two angular portions in order to prevent any loosening from the frame.

The possibility of applying to the frame a weatherstrip comprising a single profile with the same transversal section represents an advantage got by the invention.

This result has been obtained providing means subdivided in two parts, a first one comprising two slabs 33 and 34 having right angle to one another applied only on the part of the weatherstrip relative to the column 6 along which the runner slides, the second part comprising blocking means of the slabs 33 and 34 that, being carried out with grooved C-shaped profiles, extended along the whole length of the weatherstrip, do not prevent the application in the parts of the frame seat in which are present the curves of connection between the columns and the upper horizontal frame member.

Obviously, the invention can also be extended to other weatherstrips in which the sliding ways for the runner are carried out with materials different from the elastomeric compound comprising self-lubricating charges.

Substantially the invention can be extended to all weatherstrips in which there are sliding ways for a runner and in which one of the guide surfaces of the runner can be subjected to an action of straddle as it has been indicated in the present description.

## Claims

1. Weatherstrip (1) in elastomeric material comprising: a central portion (2) and two lateral portions (3–4) folded with respect to the central one to determine a structure which is substantially "U"-shaped in cross-section and insertable in a seat of the frame for a car-window provided with sliding glass (14) and having an upper horizontal frame member (5) and two columns (6, 7); an arm (8) of predetermined length provided on at least a first (3) of the two lateral portions (3-4), folded towards the inside of the weatherstrip parallel to the first lateral portion (3) itself and spaced from the central portion (2), the extremity of said arm and at least a zone (10) of the central portion (2) of the weatherstrip (1) forming guide and contact surfaces for the opposite sides (11, 12) of the rigid runner (13) associated to the glass (14) and slidable along one of said columns (6) of the frame to open and close the car-window; a resistant element (32) provided in an angular part (20) of the "U"-shaped weatherstrip delimited between the central portion (2) and said first lateral portion (3); and blocking means to fix the resistant element (32) to the angular part (20) characterized in that said resistant element (32) is formed by two slabs (33, 34) substantially perpendicular to each other and in that said blocking means comprises two continuous elastomeric C-shaped profiles (30, 31), one of the profiles (30) being formed on the inner part of the central portion (2) and the other one (31) on the first lateral portion (3) under the arm (8), said resistant element (32) being inserted between said profiles (30, 31).

2. Weatherstrip as in claim 1 characterized by the fact that said resistant element and blocking means are provided in both the two angular parts (19, 20) of the weatherstrip, said angular parts being carried out as hinges apt to the mounting of the weatherstrip in a frame which is U-shaped in cross-section.

3. Weatherstrip as in claim 1 characterized by the fact that said blocking means is in hard elastomeric material and is extruded simultaneously to the weatherstrip.

4. Weatherstrip as in Claim 1 characterized by the fact that the said resistant element (32) is disposed only in the part of the weatherstrips applied on the vertical column (6).

5. Weatherstrip as in claim 1 characterized by the fact of being formed in a single extruded profile applied on the two columns (6, 7) and on the upper horizontal frame member (5).

6. Weatherstrip as in claim 1 characterized by the fact that the contact surface of the central portion is formed by a relief (16) ad two continuous ribs (17, 18) longitudinally extending along the whole weatherstrip.

## Patentansprüche

1. Dichtungsstreifen (1), der aus elastomerem Material besteht und umfaßt: einen mittleren Abschnitt (2) und zwei seitliche Abschnitte (3, 4), die mit Bezug auf den mittleren Abschnitt umgebogen sind, um ein Gebilde zu bestimmen, welches im Querschnitt im wesentlichen U-Gestalt hat und in einen Sitz des Rahmens für ein Fahrzeugfenster eingesetzt werden kann, der mit einer verschiebbaren Glasscheibe (14) versehen ist und einen oberen horizontalen Rahmenteil (5) und zwei Säulenteile (6, 7) hat, einen Arm (8) vorbestimmter Länge, der wenigstens an dem ersten (3) der beiden seitlichen Abschnitte (3, 4) vorgesehen und in Richtung zur Innenseite des Dichtungsstreifens parallel zu dem ersten seitlichen Abschnitt (3) umgebogen ist und in einem Abstand von dem mittleren Abschnitt (2) liegt, wobei das Ende des Armes und wenigstens eine Zone (10) des mittleren Abschnitts (2) des Dichtungsstreifens (1) Führungs- und Berührungsflächen für die gegenüberliegenden Seiten (11, 12) des der Glasscheibe (14) zugeordneten starren Läufers (13) bilden und entlang einer der Säulen (6) des Rahmens verschiebbar sind, um das Fahrzeugfenster zu öffnen und zu schließen, ein widerstandsfähiges Element (32), welches in einem Winkelteil (20) des U-förmigen Dichtungsstreifens vorgesehen ist, der zwischen dem mittleren Abschnitt (2) und dem ersten seitlichen Abschnitt (3) begrenzt ist, und Blockiermittel, um das widerstandsfähige Element (32) an dem Winkelteil (20) festzulegen, dadurch gekennzeichnet, daß das widerstandsfähige Element (32) durch zwei Plattenteile (33, 34) gebildet ist, die im wesentlichen rechtwinkelig zueinander vorgesehen sind, und daß die Blockiermittel zwei kontinuierliche elastomere C-förmige Profilteile (30, 31) aufweisen, von denen ein Profilteil (30) an dem inneren Teil des mittleren Abschnitts (2), und der andere Profilteil (31) an dem ersten seitlichen Abschnitt (3) unter dem Arm (8) gebildet ist, und das widerstandsfähige Element (32) zwischen die Profilteile (30, 31) eingesetzt ist.

2. Dichtungsstreifen nach Anspruch 1, dadurch gekennzeichnet, daß das widerstandsfähige Element und die Blockiermittel in den beiden Winkelteilen (19, 20) des Dichtungsstreifens vorgesehen und als Scharniere bzw. Gelenke ausgeführt sind, welche den Dichtungsstreifen in einem Rahmen anbringen können, der im Querschnitt U-förmig ist.

3. Dichtungsstreifen nach Anspruch 1, dadurch gekennzeichnet, daß die Blockiermittel aus hartem elastomerem Material gebildet und gleichzeitig mit dem Dichtungsstreifen extrudiert sind.

4. Dichtungsstreifen nach Anspruch 1, dadurch gekennzeichnet, daß das widerstandsfähige Element (32) nur in demjenigen Teil des Dichtungsstreifens angeordnet ist, der an der vertikalen Säule (6) angebracht ist.

5. Dichtungsstreifen nach Anspruch 1, dadurch gekennzeichnet, daß er zu einem einzigen extrudierten Profilteil gebildet ist, der an den beiden Säulen (6, 7) und an dem oberen horizontalen Rahmenteil (5) angebracht ist.

6. Dichtungsstreifen nach Anspruch 1, dadurch gekennzeichnet, daß die Berührungsfläche des mittleren Abschnitts durch ein Relief (16) und zwei kontinuierliche Rippen (17, 18) gebildet ist, die sich in Längsrichtung entlang des gesamten Dichtungsstreifens erstrecken.

## Revendications

1. Joint coulisseau de vitre (1) en matière élastomère comprenant: une partie centrale (2) et deux parties latérales (3, 4) pliées par rapport à la partie centrale pour déterminer une structure qui est sensiblement en forme de U en coupe transversale et insérable dans un siège d'un cadre d'une fenêtre de voiture comportant une glace coulissante (14) et comportant un organe de cadre horizontal supérieur (5) et deux colonnes (6, 7); un bras (8) d'une longueur prédéterminée disposé sur au moins un première (3) des deux parties latérales (3, 4) pliée vers l'intérieur d'un joint coulisseau de vitre parallèlement à la première partie latérale (3) elle-même et espacée de la partie centrale (2), l'extrémité dudit bras et au moins une zone (10) de la partie centrale (2) du joint coulisseau de vitre (1) formant des surfaces de guidage et de contact pour les côtés opposés (11, 12) du curseur rigide (13) associé à la glace (14) et coulissant le long d'une desdites colonnes (6) du cadre pour ouvrir et fermer la fenêtre de voiture; un élément résistant (32) disposé dans une partie angulaire (20) du joint coulisseau de vitre en forme de U délimité entre la partie centrale (2) et ladite première partie latérale (3); et des moyens de blocage pour fixer l'élément résistant (32) sur la partie angulaire (20) caractérisé en ce que ledit élément résistant (32) est formé de deux dalles (33, 34), sensiblement perpendiculaires l'une à l'autre, et en ce que ledit moyen de blocage comprend deux profilés continus en élastomère en forme de C (30, 31) l'un des profils (30) étant formé sur la partie intérieure de la partie centrale (2) et l'autre (31), sur la première patie latérale (3) au-dessous du bras (8), ledit élément résistant (32) étant inséré entre lesdits profilés (30, 31).

2. Joint coulisseau de vitre selon la revendication 1, caractérisé par le fait que ledit élément résistant et ledit moyen de blocage sont disposés dans les deux parties angulaires (19, 20) du joint coulisseau de vitre, lesdites parties angulaires étant réalisées sous forme de charnières aptes à un montage du joint coulisseau de vitre dans un cadre qui est en forme de U en section transversale.

3. Joint coulisseau de vitre selon la revendication 1, caractérisé par le fait que ledit moyen de blocage est en une matière élastomère dure, et est extrudé simultanément avec le joint coulisseau de vitre.

4. Joint coulisseau de vitre selon la revendication 1, caractérisé par le fait que ledit élément résistant (32) est disposé seulement dans la partie des joints coulisseaux de glace appliqués sur la colonne verticale (6).

5. Joint coulisseau de vitre selon la revendication 1, caractérisé par le fait qu'il est formé en un profilé extrudé unique appliqué sur les deux colonnes (6, 7) et sur l'organe de cadre horizontal supérieur (5).

6. Joint coulisseau de vitre selon la revendication (1), caractérisé par le fait que la surface de contact de la partie centrale est formée par un retrait (16) et deux nervures continues (17, 18) s'étendant longitudinalement le long de tout le joint coulisseau de vitre.

EP 0 303 099 B1

Fig. 1

Fig. 2

Fig. 3